# FASCICULE DE BREVET EUROPEEN

(11) **EP 2 543 592 B1**
(45) Date de publication et mention de la délivrance du brevet: **22.02.2017**
(21) Numéro de dépôt: 12185384.0
(22) Date de dépôt: 17.12.2010
(51) Int. Cl.: B64C 25/40

(54) **Système de motorisation électrique d'une roue**
Elektrisches Motorisierungssystem eines Rads
System for electric motorisation of a wheel

(30) Priorité: 17.12.2009 FR 0959145
(43) Date de publication de la demande: 09.01.2013
(62) Demande divisionnaire de: 10807612.6
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH); Airbus Operations Limited, Bristol BS99 7AR (GB)
(72) Inventeur: Essinger, Olivier, 1814 La Tour de Peilz (CH); Stacchi, Cesare, 6648 Minusio (CH)
(74) Mandataire: Dequire, Philippe Jean-Marie Denis

(56) Documents cités:
- WO-A1-2008/001013
- GB-A- 2 210 833
- JP-A- 2006 017 271
- US-A- 3 762 670

## Description

La présente invention concerne un système de motorisation d'une roue d'un aéronef, par exemple appliqué à un avion, pour la circulation de celui-ci au sol.

Lorsque l'on parle de motoriser la circulation des aéronef au sol, il s'agit de motoriser le déplacement des aéronefs de manière autonome mais à des vitesses réduites comme c'est le cas pour un avion avant son décollage ou après son atterrissage sur les aéroports, il s'agit de ce qu'on appelle couramment le « taxiing » Il ne s'agit donc pas ici de motoriser la roue de manière à lui donner vitesse en rapport avec la vitesse d'atterrissage comme on l'a déjà proposé dans l'état de la technique.

On connaît un système de motorisation d'une roue associée à une suspension, du type comprenant un bloc moteur, un organe d'entraînement solidaire de la roue, et un dispositif d'embrayage reliant l'arbre de sortie du bloc moteur à l'organe d'entraînement.

Cependant, de tels systèmes sont souvent peu compatibles avec les déformations de la suspension et de la jante de la roue, déformations qui interviennent lors des différentes manoeuvres au sol tel que les virages ou les freinages.

Le document WO2008/001013 A1 décrit toutes les caractéristiques du préambule de la revendication 1.

La présente invention vise à réaliser un système de motorisation pouvant supporter facilement les déformations de la jambe de suspension et de la roue elle-même.

Selon l'invention, dans le système de motorisation du type précité, le bloc moteur comprend un moteur électrique et est porté par une partie non suspendue d'une jambe de suspension.

Ainsi, l'intégralité du système de motorisation est portée par la partie non suspendue de la jambe de suspension : d'une part, l'organe d'entraînement par la roue, et, d'autre part, le bloc moteur et le dispositif d'embrayage par la traverse d'essieu, ce qui facilite l'intégration du système de motorisation. De plus, du fait de cette disposition, il n'est pas nécessaire de tenir compte du mouvement de l'amortisseur de la suspension pour la mise en relation de l'arbre de sortie du bloc moteur à l'organe d'entraînement.

Selon une première variante, le bloc moteur est porté par une traverse d'essieu de la roue.

Selon une seconde variante, le bloc moteur comprend un système de réduction reliant l'arbre de sortie du moteur à l'organe d'entraînement.

Selon une troisième variante, le système de réduction est solidaire du moteur.

Selon une quatrième variante, le dispositif d'embrayage est conformé de façon à pouvoir déplacer le bloc moteur dans une position embrayée dans laquelle ce bloc est relié à l'organe d'entraînement, et une position débrayée dans laquelle ce bloc en est séparé.

Selon une cinquième variante, le dispositif d'embrayage est conformé de sorte que le bloc moteur est monté pivotant par rapport à la traverse d'essieu, selon un axe horizontal.

Selon une sixième variante, le dispositif d'embrayage comprend un système de déplacement permettant de déplacer le bloc moteur de l'une à l'autre de ses deux positions embrayée et débrayée.

Selon une septième variante non-revendiquée, le système de déplacement est adapté à appliquer au bloc moteur une force supérieure à une valeur limite nécessaire pour que le bloc moteur reste en position embrayée.

Selon une huitième variante non-revendiquée, le système de déplacement comprend un élément moteur.

Selon une neuvième variante non-revendiquée, l'élément moteur est formé par un vérin.

Selon une dixième variante non-revendiquée, une extrémité du vérin est montée en rotation sur une pièce de fixation solidaire de la traverse, l'autre extrémité du vérin étant montée en rotation à deux bielles, l'une de ces bielles étant montée en rotation sur la pièce de fixation, l'autre bielle étant montée en rotation sur le bloc moteur.

Selon une onzième variante non-revendiquée, le bloc moteur est agencé de façon à être naturellement entraîné par son propre poids en position débrayée.

Selon une douzième variante non-revendiquée, le dispositif d'embrayage comprend une bielle guidée permettant de définir la position débrayée du mouvement du bloc moteur.

Selon une treizième variante, la bielle guidée comprend une tige, ladite tige étant, d'une part, montée en rotation sur une pièce de fixation solidaire de la traverse, et, d'autre part, montée coulissante par rapport à un pivot porté par le bloc moteur.

Selon une quatorzième variante non-revendiquée, une unité d'amortissement permettant d'absorber les chocs du bloc moteur est disposée entre le pivot et l'extrémité libre de la tige.

Selon une quinzième variante non-revendiquée, l'unité d'amortissement est formée par une butée fixe fixée à l'extrémité libre de la tige, une butée mobile montée coulissante le long de la tige entre l'extrémité libre de cette dernière et le pivot, et un organe élastique disposé entre les deux butées de façon à ce que l'organe élastique soit précontraint entre les deux butées lors que le bloc moteur n'est pas en position débrayée.

Selon l'invention, l'organe d'entraînement est une couronne dentée portée par la jante de la roue, et adaptée à recevoir en engrènement le pignon de sortie du bloc moteur quand ce dernier est dans sa position embrayée et la position engrenée du pignon de sortie est définie par deux lèvres de roulement portées par la couronne dentée et adaptées à recevoir en roulement sans glissement deux pistes de roulement portées par le pignon.

L'invention concerne également un ensemble de deux systèmes de motorisation conformes au premier aspect de l'invention, les deux blocs moteur étant solidaires l'un de l'autre et fixés à la partie non suspendue de la jambe de suspension commune aux deux roues.

Selon une première variante, les deux blocs moteur sont disposés entre les deux roues.

Selon une deuxième variante non-revendiquée, les deux blocs moteur sont disposés derrière une jambe de suspension portant la traverse d'essieu.

Selon une troisième variante non-revendiquée, l'ensemble de deux systèmes de motorisation ne comprend qu'un seul dispositif d'embrayage commun aux deux systèmes.

Un tel système de motorisation ou un tel ensemble de deux systèmes de motorisation, selon le cas, est avantageusement utilisé pour la motorisation d'un train d'atterrissage principal d'un aéronef.

D'autres particularités et avantages de la présente invention apparaîtront dans les deux modes de réalisation donnés à titre d'exemples non limitatifs et illustrés par les dessins mis en annexe dans lesquels :
La figure 1 est une vue en perspective arrière d'un train d'atterrissage d'avion équipé d'un ensemble de deux systèmes de motorisation de roue conformes à un premier mode de réalisation de la présente invention, l'ensemble étant embrayé aux roues ;
La figure 2 est une vue en coupe selon un plan perpendiculaire à l'axe des roues du train d'atterrissage de la figure 1, l'ensemble des deux systèmes étant en position embrayée ;
La figure 3 est une vus similaire à la figure 2, l'ensemble des deux systèmes de motorisation étant en position débrayée ;
La figure 4 est une vue en coupe du système de déplacement du dispositif d'embrayage de l'ensemble des deux systèmes de motorisation ;
La figure 5 est une vue de la bielle guidée du dispositif d'embrayage de l'ensemble des deux systèmes de motorisation ;
La figure 6A est une vue illustrant la coopération entre une roue et l'arbre de sortie du bloc moteur correspondant;
La figure 6B est une vue en perspective du mécanisme de la figure 6A ;
La figure 6C est une vue en perspective similaire à la figure 6B mais dans laquelle le pignon a été oté pour faire apparaître le joint homocinétique interne ;
La figure 7 est une vue en coupe axiale d'un bloc moteur, sans le pignon de sortie de ce dernier ;
La figure 8 est une vue similaire à la figure 1, illustrant un second mode de réalisation de la présente invention ;
La figure 9 est une vue similaire à la figure 2 de l'ensemble des deux systèmes de motorisation conforme au second mode de réalisation ;
La figure 10 est une vue en perspective d'un train d'atterrissage d'avion équipé d'un ensemble de deux systèmes de motorisation de roue conformes à un second mode de réalisation de la présente invention, l'ensemble étant embrayé aux roues et la roue la plus proche étant représentée sans pneu ni jante ;
La figure 11 est une vue en coupe selon un plan perpendiculaire à l'axe des roues du train d'atterrissage de la figure 10, l'ensemble des deux systèmes étant en position embrayée ;
La figure 12 est une vue similaire à la figure 11, l'ensemble des deux systèmes étant en position débrayée ;
La figure 13 est une vue en perspective du dispositif d'embrayage de l'ensemble des deux systèmes ;
La figure 14 est une vue en coupe dans un plan comprenant les axes des engrenages du bloc réducteur de ce second mode de réalisation ; et

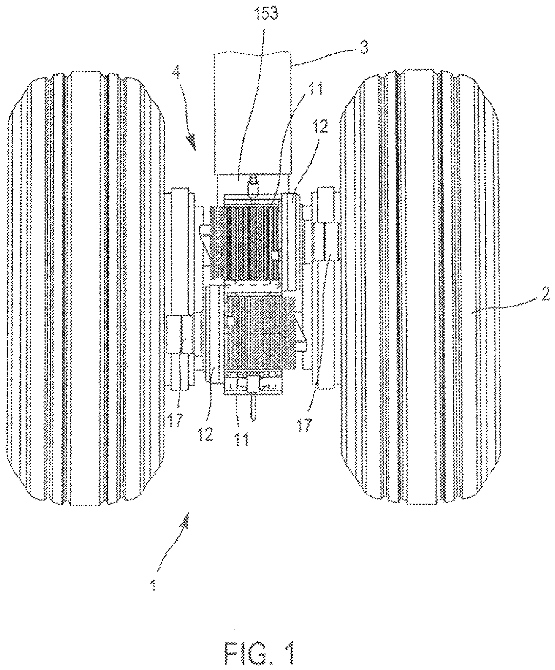

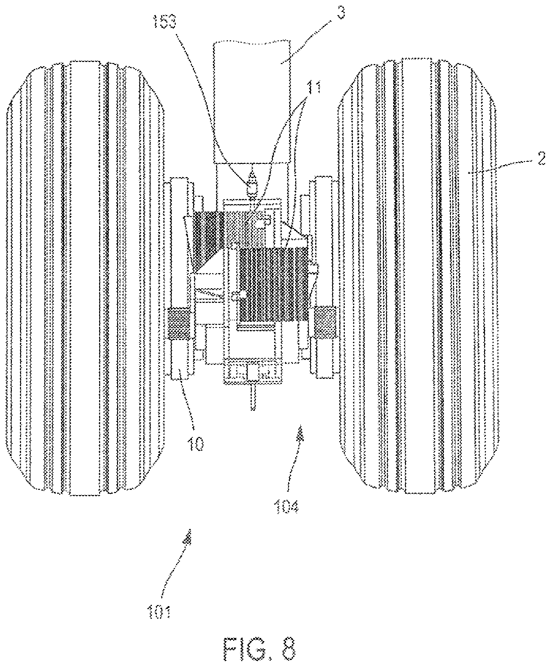

Les figures 1 et 8 représentent un train d'atterrissage principal 1, 101 d'un avion, comportant deux roues 2 coaxiales, et une jambe de suspension 3 portant ces deux roues 2. Ce train d'atterrissage 1, 101 comprend également un ensemble de deux systèmes de motorisation de roue, à savoir, un système par roue 2. Le fait d'avoir un système de motorisation pour chaque roue 2 supprime le besoin de rajouter un différentiel et permet d'adapter la vitesse des roues 2 pendant les virages. Cela permet aussi d'équilibrer en partie les efforts sur la suspension et sur le système de motorisation de la roue. De plus, cela répartit les efforts sur tous les pneumatiques donc cela homogénéise et limite leur usure.

Un système de motorisation conforme à la présente invention comprend un bloc moteur 4, 104 qui est solidaire de la traverse d'essieu 5 de la roue 2, un organe d'entraînement 6 qui est solidaire de la roue 2, et un dispositif d'embrayage 7 qui permet de relier l'arbre de sortie 8 du bloc moteur 4, 104 à l'organe d'entraînement 6. De façon plus précise, le bloc moteur 4, 104 et le dispositif d'embrayage 7 sont disposés à l'extérieur de la traverse 5 et sont reliés l'un à l'autre tout en étant en porte à faux par rapport à cette traverse.

Ainsi, l'ensemble du système de motorisation est porté par la partie non suspendue 3a de la jambe de suspension 3 : le bloc moteur 4, 104 et le dispositif d'embrayage 7 sont portés par la traverse d'essieu 5, et l'organe d'entraînement 6 est porté par la roue 2.

Dans les présents modes de réalisation, l'organe d'entraînement 6 solidaire de la roue 2 est formé par une couronne dentée 6 portée par la jante 9 de cette roue 2, cette couronne 6 recevant en engrènement le pignon de sortie 10 du bloc moteur 4, 104 quand ce dernier est dans sa position embrayée. Ce type de transmission par pignons et roues dentées est qualifié de transmission « positive » par opposition aux systèmes de transmission par frottement comme les systèmes à galets. Une transmission positive n'est pas tributaire du coefficient de frottement et donc par exemple insensible aux intempéries ou à l'usure des éléments mis en oeuvre. On classe donc également les systèmes à courroies crantées parmi les transmissions positives, alors que les courroies lisses (plates ou en V) sont classées parmi les systèmes de transmission par frottement.

Par ailleurs, dans les présents modes de réalisation, le bloc moteur 4, 104 comprend un moteur 11 (plus précisément, un moteur électrique qui, ici, est un moteur synchrone sans balai) et un système de réduction 12, 112 qui relie l'arbre de sortie 13 du moteur 11 à l'organe d'entraînement 6. Ici, le système de réduction 12, 112 est solidaire du moteur 11. Le moteur électrique 11, ainsi disposé, peut être facilement refroidi par l'air ambiant (ce refroidissement dépendant de la vitesse de déplacement de l'aéronef).

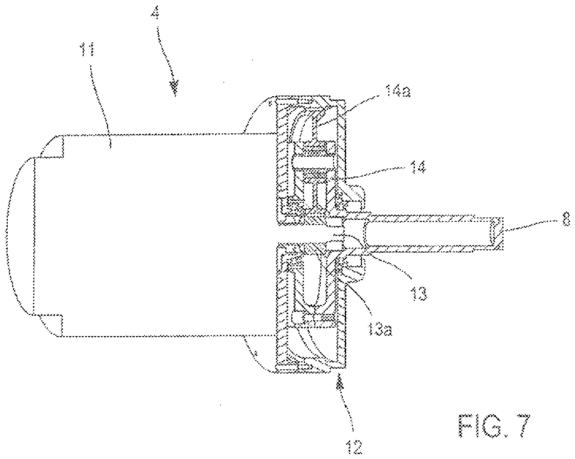

Comme illustré à la figure 7, le système de réduction 12 du premier mode de réalisation comprend un étage qui, ici, est formé par un train épicycloïdal. En outre, le système de motorisation comprend un second étage de réduction formé par le pignon de sortie 10 du bloc moteur 4 (plus précisément, le pignon de sortie 10 du système de réduction 12) et la couronne dentée 6 portée par la roue 2.

De façon plus précise, le système de réduction 12 du premier mode de réalisation est formé par l'engrènement d'un pignon solaire 13a porté par l'arbre de sortie 13 du moteur 11 et de satellites 14a portés par un porte-satellites 14. Le rapport de réduction est de préférence supérieur à 5 (ici, il est de 7,5). Le second étage (hors du bloc moteur) est formé par l'engrènement du pignon de sortie 10 du bloc moteur 4 porté par le porte satellite 14 et par la couronne dentée 6 portée par la roue 2 (le rapport de réduction est ici de 6,8). Ainsi, dans le présent cas, le rapport de réduction total est de 51. Ici, le système de réduction 12 est aligné avec le moteur 11, de sorte que l'arbre de sortie 13 du moteur 11 est coaxial avec l'arbre de sortie 8 du système de réduction 12 (qui est aussi l'arbre de sortie 8 du bloc moteur 4).

Dans l'ensemble de deux systèmes de motorisation illustrés aux figures 1 à 3, 8 et 9, les deux blocs moteur 4, 104 sont solidaires l'un de l'autre. Pour des raisons de compacité, les deux blocs moteurs 4, 104 sont disposés entre les deux roues 2. En outre, pour limiter le risque en cas de collision avec des objets externes (ou des oiseaux), en particulier au moment de l'atterrissage ou du décollage, les deux blocs moteurs 4, 104 sont disposés derrière la jambe de suspension 3. Ici, les deux blocs moteur 4, 104 sont disposés accolés l'un à l'autre.

Dans le premier mode de réalisation, les arbres de sortie 10 des blocs moteurs 4 sont parallèles.

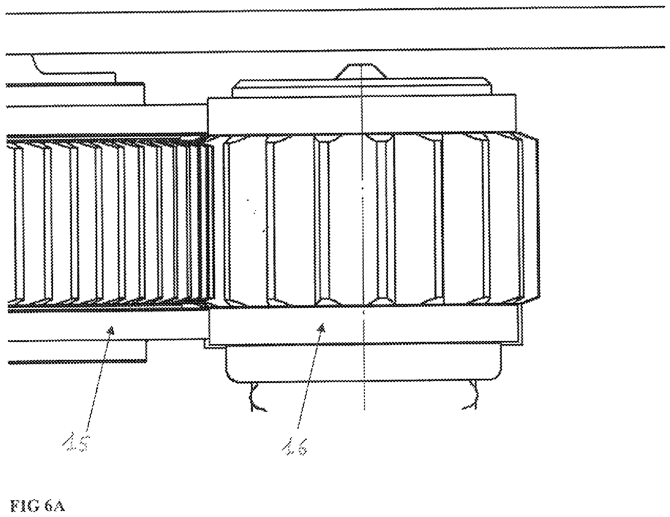

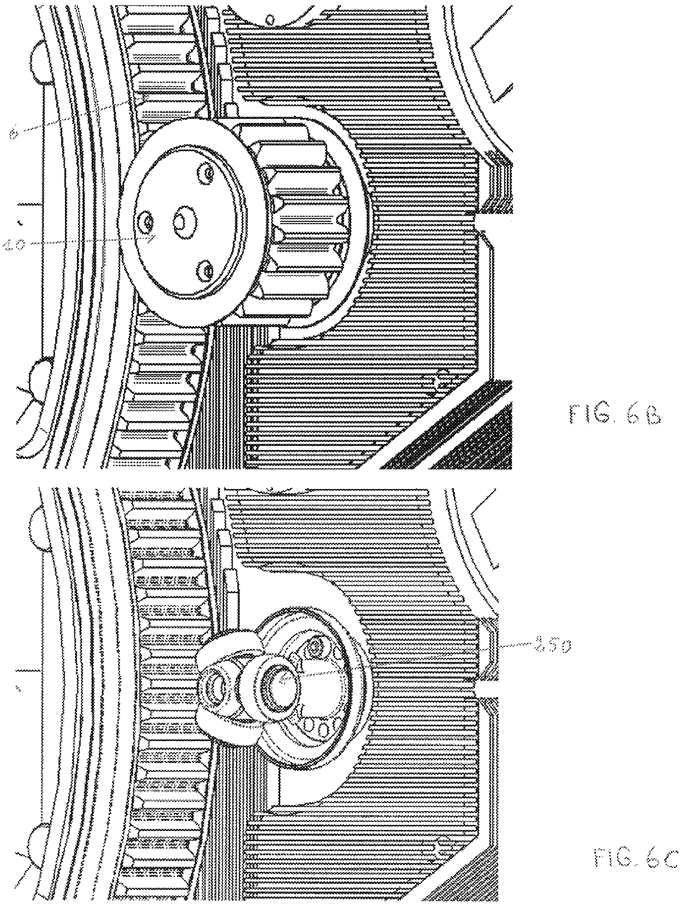

Afin de définir la position d'engrènement du bloc moteur 4, 104 (plus, précisément, celle du pignon 10), Figure 6A, la couronne dentée 6 porte deux lèvres de roulement cylindriques 15 qui sont adaptées à recevoir en roulement sans glissement deux pistes de roulement 16 portées par le pignon de sortie 10 du bloc moteur 4, 104. Les diamètres de roulement des lèvres de roulement 15 et pistes de roulement 16 correspondent aux diamètres primitifs des engrenages 6, 10.

Enfin, afin de compenser une variation angulaire entre l'arbre de sortie 8 du bloc moteur 4 et la couronne dentée 6 de la roue 2 qui serait engendrée par la déformation du train d'atterrissage sous charge, le pignon 10 est porté par l'arbre de sortie 8 du bloc moteur 4 par l'intermédiaire d'un joint homocinétique 250, Figure 6C, qui accepte une déformation angulaire tout en transmettant le couple d'entraînement sans variation de vitesse. Ce joint homocinétique peut être, par exemple, un joint tripode coulissant ou un joint à bille plongeant afin de permettre en outre un déplacement axial. Cette utilisation d'un joint homocinétique n'est pas habituelle. En effet, l'utilisation classique d'un joint homocinétique est la même que celle d'un joint cardan, c'est à dire qu'il travaille en torsion pure, les efforts radiaux et axiaux étant repris par les paliers supportant les axes. Or, dans l'utilisation présente, le joint homocinétique est utilisé pour transmettre un effort radial (force d'appui du dispositif d'embrayage) et un effort tangentiel (force motrice).. Le joint permet alors d'absorber un désalignement entre le réducteur et la roue.

De plus, l'utilisation des pistes de roulement qui définissent l'entraxe d'engrènement et la position du joint homocinétique complètent le dispositif et permettent de réaliser une transmission par engrenage travaillant sous forte déformation de la roue par rapport au réducteur, par exemple une déformation angulaire de plusieurs degrés (par exemple de l'ordre de +/- 5°).

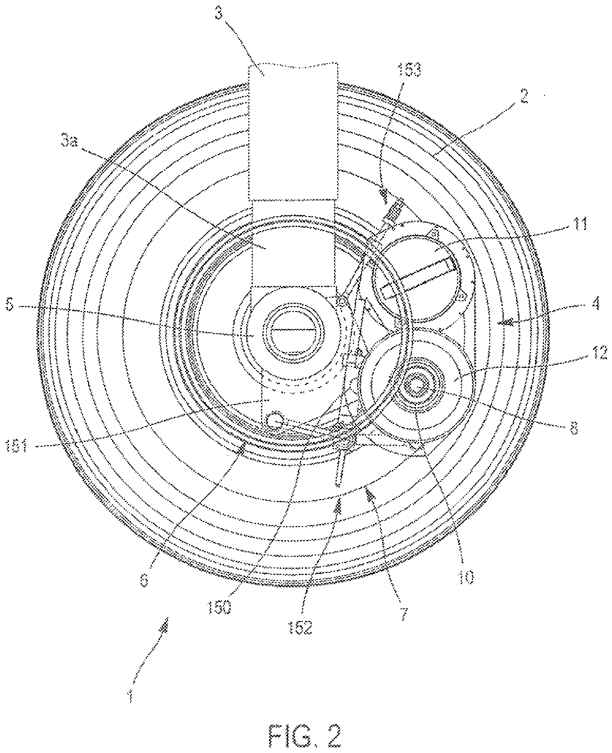

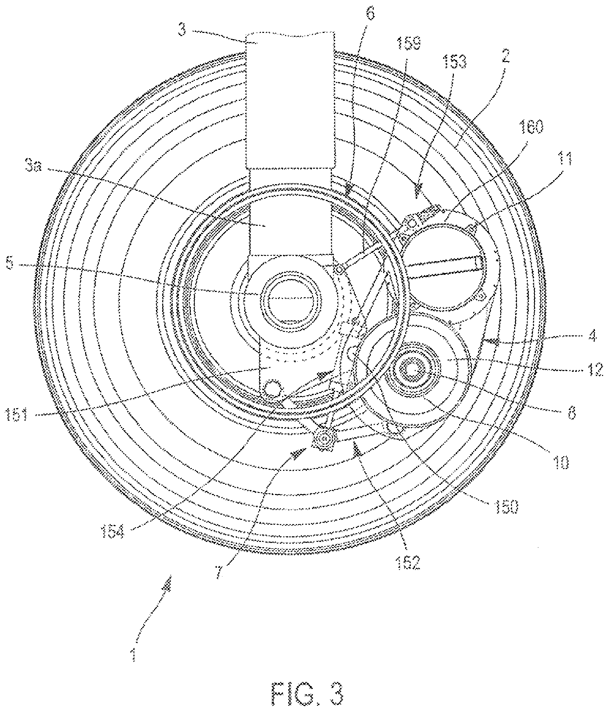

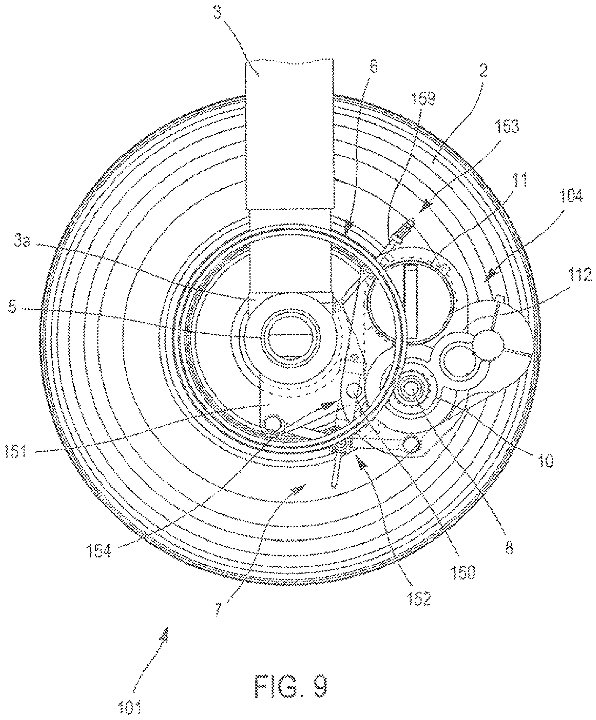

Par ailleurs, le dispositif d'embrayage 7 d'un système de motorisation est conformé de façon à pouvoir déplacer le bloc moteur 4, 104 entre une position embrayée dans laquelle le bloc 4, 104 est relié à l'organe d'entraînement 6 (pignon de sortie 10 du système de réduction 12, 112 engrené à la couronne dentée 6 de la roue 2, tel qu'illustré aux figures 2 et 9), et une position débrayée dans laquelle le bloc 4, 104 est séparé de l'organe d'entraînement 6 (pignon 10 désengrené de la couronne dentée 6, tel qu'illustré à la figure 3). Dans les présents modes de réalisation, afin d'avoir une mise en engrenage quasi simultané des deux blocs moteur 4, 104 avec les deux roues 2 et du fait de la solidarisation des deux blocs moteur 4, 104, l'ensemble de deux systèmes de motorisation ne comprend qu'un seul dispositif d'embrayage 7.

Dans les présents modes de réalisation, le dispositif d'embrayage 7 est conformé de sorte que le bloc moteur 4, 104 est monté en rotation (par rapport à la traverse d'essieu 5) selon un axe horizontal. De façon plus précise, le bloc moteur 4, 104 est relié de façon pivotante à la partie non suspendue 3a de la jambe de suspension 3 par un pivot 150 (la liaison pivotante du bloc moteur 4, 104 est réalisée sur une pièce de fixation 151 portée par la traverse d'essieu 5). Ainsi, l'embrayage correspond à un mouvement du bloc moteur 4, 104 vers l'avant et vers le haut, et le débrayage à un mouvement vers l'arrière et vers le bas.

Au dispositif d'embrayage 7 est associé un système d'adaptation de vitesse commandé électroniquement. Ce système comprend un capteur permettant de mesurer la vitesse de la roue 2 et de commander la vitesse de rotation correspondante du moteur 11.

Dans les présents modes de réalisation, comme illustré aux figures 2 à 5 et 9, le dispositif d'embrayage 7 comprend un système de déplacement 152 permettant de déplacer le bloc moteur 4, 104 de l'une à l'autre de ses deux positions embrayée et débrayée, ainsi qu'une bielle guidée 153 permettant de définir la position débrayée du bloc moteur 4, 104.

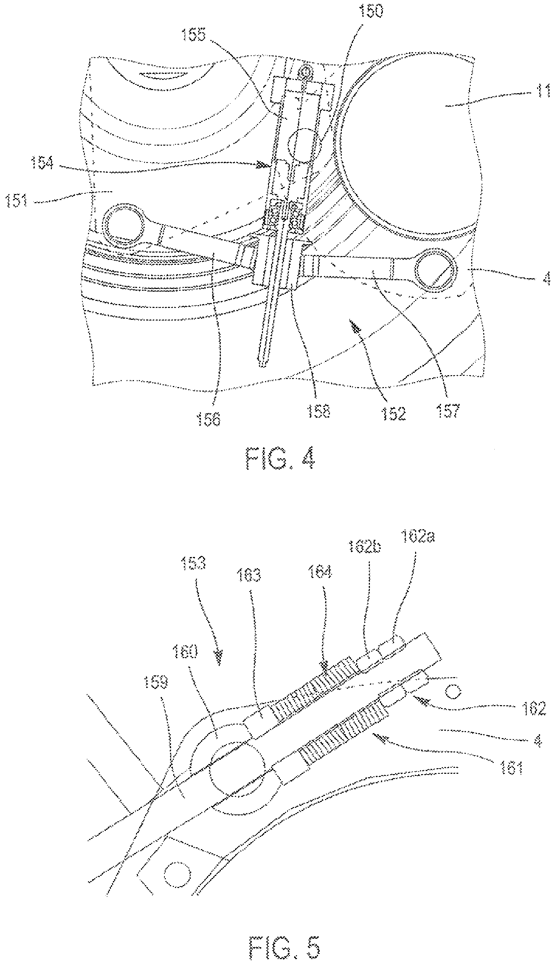

Comme illustré à la figure 4, le système de déplacement 152 comprend un vérin 154 relié au bloc moteur 4, 104 et à la partie non suspendue 3a de la jambe de suspension 3. De façon plus précise, une extrémité du vérin 154 (ici, le cylindre 155) est montée en rotation selon un axe horizontal sur la pièce de fixation 151. L'autre extrémité est montée en rotation à deux bielles 156, 157 selon deux axes horizontaux, l'une 156 de ces bielles est également montée en rotation selon un axe horizontal sur la pièce de fixation 151, l'autre bielle 157 est quant à elle montée en rotation selon un axe horizontal sur le bloc moteur 4, 104. Ici, le vérin 154 est un vérin électrique. De façon plus précise, ce vérin 154 comprend un moteur d'entraînement qui est disposé dans le cylindre 155, un écrou 158 auquel sont reliées les deux bielles 156, 157, et une vis (par exemple à billes ou à rouleaux satellites).

Le dispositif d'embrayage 7 (plus précisément, le système de déplacement 152 avec la genouillère 156, 157 qui y est associée) permet d'appliquer une force suffisante sur le pignon de sortie 10, 110 du bloc moteur 4, 104 afin de le maintenir engrené avec la couronne dentée 6. Du fait de la position relative des blocs moteur 4, 104, ceux-ci sont naturellement entraînés, par leur poids, en position débrayée. De ce fait, quand le vérin 154 n'exerce plus aucun effort (dès que l'alimentation électrique du moteur d'entraînement est coupée), les blocs moteurs 4, 104 passent dans leur position débrayée.

La bielle guidée 153 quant à elle permet de définir la position débrayée du bloc moteur 4, 104. Comme illustré à la figure 5, la bielle guidée 153 comprend une tige 159 qui est montée en rotation (par une première extrémité) sur la pièce de fixation 151 autour d'un axe horizontal fixe. La tige 159 est montée coulissante à travers un pivot 160 qui est porté par les blocs moteur 4, 104. A l'extrémité libre de la tige 159 est disposée une unité d'amortissement 161 permettant d'absorber les chocs à l'atterrissage. Ici, cette unité d'amortissement 161 est formée par une butée fixe 162 (en l'occurrence, deux écrous 162a, 162b) fixée à l'extrémité libre de la tige 159, une butée mobile 163 (en l'occurrence une rondelle 163) montée coulissante le long de l'extrémité libre de la tige 159 et l'organe élastique 164 (ici, un empilement de rondelles ressort) disposé entre la butée fixe 162 et la butée mobile 163. Ainsi, quand le bloc moteur 4, 104 passe de sa position embrayée à sa position débrayée, le pivot 160 monté en libre rotation par rapport au bloc moteur 4, 104, entraîne la rotation et le coulissement de la tige 159. Pendant le passage de la position embrayée à la position débrayée du bloc moteur 4, 104 la butée mobile 163 est en appuis contre un épaulement de l'extrémité de la tige 159 (la butée mobile 163 ne peut pas coulisser sur toute la longueur de la tige 159) de façon à garantir une précontrainte de l'organe élastique 164.

De ce fait, quand le bloc moteur 4, 104 est en position débrayée, la butée mobile 163 est appuyée contre le pivot 160 et de ce fait comprime l'organe élastique 164. L'organe élastique permet ainsi d'absorber le choc à l'atterrissage.

Afin d'éviter un embrayage lors des opérations de freinage, d'atterrissage, de décollage ou de toute autre opération qui donnerait lieu à des accélérations qui auraient tendance à ramener le bloc moteur en position embrayée, le système de déplacement 152 peut également comprendre un ressort de rappel (non illustré) sollicitant les blocs moteurs 4, 104 dans leur position débrayée, contre l'effet duquel le vérin 154 agit lorsqu'il entraîne les blocs moteur 4, 104 en position embrayée.

Le système de déplacement 152 est adapté à appliquer au bloc moteur 4, 104 (au pignon 10) une force supérieure à une valeur limite nécessaire pour que le bloc moteur 4, 104 reste en position embrayée (pour que le pignon 10 et la couronne dentée restent engrenés). Cette force peut être constante ou au contraire régulée à une valeur adaptée à l'effort nécessaire permettant de transmettre le couple moteur ou freineur.

Vu la configuration géométrique du système de motorisation, les efforts d'engrènement incitent au désengrènement lors d'une marche avant de l'avion et à l'engrènement lors d'une marche arrière. De ce fait, en marche avant, le vérin 154 doit être suffisamment puissant pour maintenir l'embrayage. Un changement de position du pivot 150 reliant les blocs moteur 4, 104 à la pièce de fixation 151 vers l'arrière permettrait d'avoir un système auto dégageant en marche arrière comme en marche avant.

Maintenant va être décrit un second mode de réalisation du système de motorisation. Dans les figures, les parties identiques ou similaires entre les deux modes de réalisation portent les mêmes références d'un mode de réalisation à l'autre.

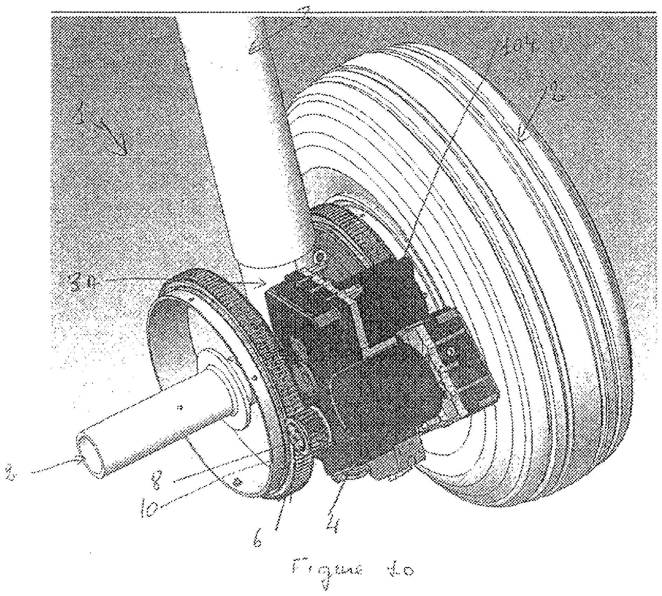

La figure 10 représente un train d'atterrissage principal 1 d'un avion, l'une des deux roues 2 de ce train étant représentée sans pneu ni jante pour des raisons de clarté. Outre les deux roues 2 qui sont coaxiales, et la jambe de suspension 3 portant ces deux roues 2, le train 1 comprend également un ensemble de deux systèmes de motorisation de roue, à savoir, un système par roue.

Un système de motorisation conforme à un second mode de réalisation de l'invention comprend un bloc moteur/réducteur 4, 104 qui est porté par la partie non suspendue 3a de la jambe de suspension 3. De façon similaire au premier mode de réalisation, il comprend également un organe d'entraînement 6 qui est solidaire de la roue 2, et un dispositif d'embrayage 7 (non visible sur la figure 10) qui permet de relier à l'organe d'entraînement 6 un pignon 10 solidaire de l'arbre de sortie 8 du bloc moteur 4.

Comme précédemment, le bloc moteur 4 comprend un moteur 11 et un système de réduction 12, 112 qui permet de relier l'arbre de sortie 13 du moteur 11 à l'organe d'entraînement 6. Ici, le système de réduction 12, 112 est solidaire du moteur 11. L'ensemble de motorisation ainsi disposé peut être facilement refroidi par l'air ambiant circulant autour des roues de l'aéronef.

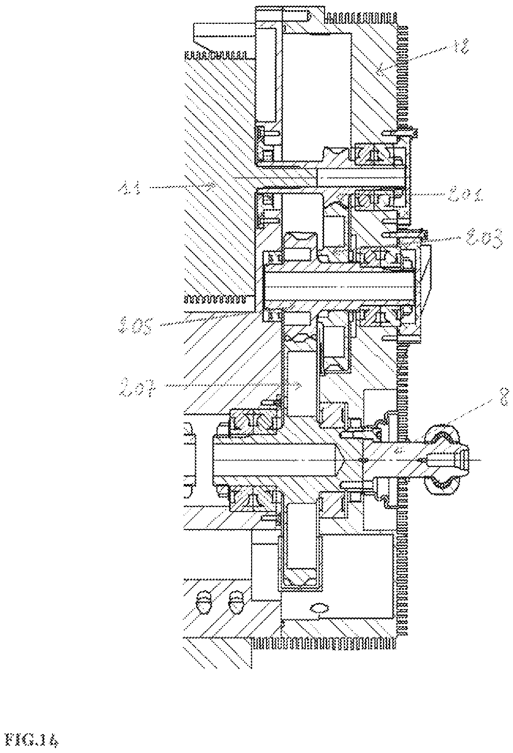

Comme illustré à la figure 14, le système de réduction 12, 112 comprend deux étages disposés en cascade. Ici, chaque étage est formé par un train simple. En outre, le système de motorisation comprend un troisième étage de réduction formé par le pignon de sortie du bloc moteur (plus précisément, le pignon de sortie 10 du système de réduction 12) et la couronne dentée 6 portée par la roue 2.

De façon plus précise, le premier étage du système de réduction 12 est formé par l'engrènement d'un premier pignon moteur 201 porté par l'arbre de sortie du moteur 11 et d'une première roue dentée 203 (le rapport de réduction est ici d'environ 3). Le second étage est formé par l'engrènement d'un second pignon 205 porté par la première roue dentée 203 et d'une seconde roue dentée 207 (le rapport de réduction est ici d'environ 2,5). Le troisième étage (hors du bloc moteur) est formé par l'engrènement du pignon de sortie 10 du bloc moteur 4 porté par l'arbre de sortie 8 solidaire de la seconde roue dentée 207, et par la couronne dentée 6 portée par la roue 2 (le rapport de réduction est ici d'environ 7).

Dans l'ensemble de deux systèmes de motorisation illustré à la figure 10, les deux blocs moteur 4, 104 sont solidaires l'un de l'autre (ici, ils sont protégés de l'extérieur par un même carter). Pour des raisons de compacité, les deux blocs moteurs 4, 104 sont disposés entre les deux roues 2. En outre, pour diminuer le risque de collision avec des objets externes (ou des oiseaux), surtout lors des phases de décollage et d'atterrissage, les deux blocs moteurs 3 sont disposés de préférence derrière la jambe de suspension 3.

De plus, les deux blocs moteurs sont disposés en V l'un par rapport à l'autre de sorte que les arbres de sortie 8, et donc les pignons 10, sont sur un même axe, de manière similaire à la figure 8. Cela permet un fonctionnement symétrique permettant une meilleure efficacité de l'engrènement.

De plus, cette disposition en V permet aux blocs moteurs 4, 104 de ne pas toucher le sol à l'atterrissage si un pneu éclate et de protéger le deuxième moteur des impacts (oiseaux, etc.). La pointe basse du V correspond à l'axe commun des deux arbres de sortie 8 des deux systèmes de réduction 12 , 112, chaque extrémité supérieure du V correspondant à l'axe d'un moteur 11. De plus, cette disposition en V des réducteurs est avantageuse pour la lubrification des engrenages. Pendant le fonctionnement, les engrenages font circuler l'huile (qui à repos se trouve dans le réservoir situé dans la pointe du V) jusqu'au premier étage ce qui permet une lubrification de tous les engrenages.

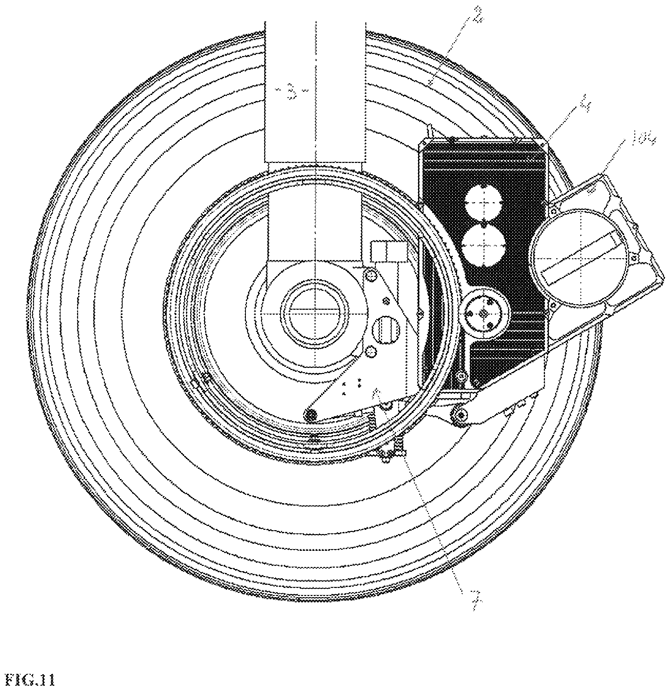

Il est à noter également que l'engrènement pignon - roue dentée se trouve sensiblement à la même hauteur que l'axe des roues dans ce mode de réalisation de l'invention, Figure 11, ce qui permet de mieux accommoder les déformations de la traverse ou de la roue. L'expression « sensiblement à la même hauteur » doit être interprétée dans ce contexte comme un positionnement de l'engrènement précisément à la même hauteur ou dans une secteur angulaire allant de 20° sous l'horizontale à 20° au dessus de l'horizontale.

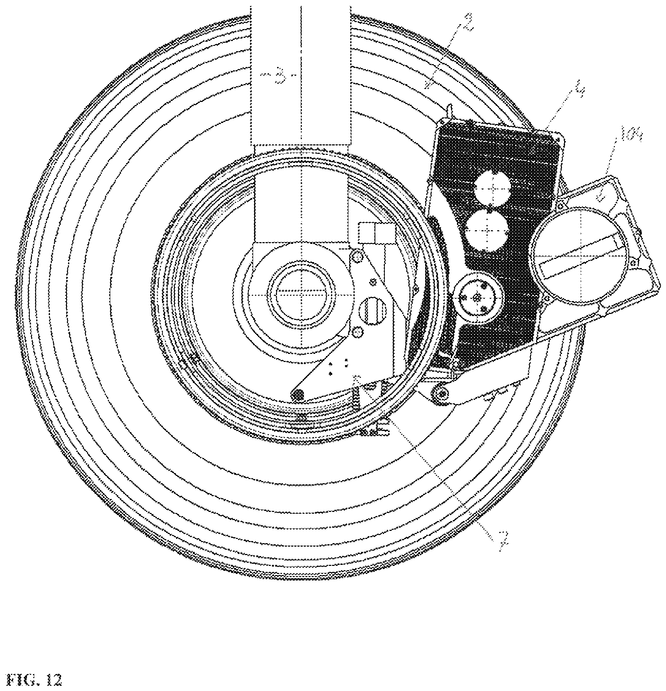

Par ailleurs, le dispositif d'embrayage 7 d'un système de motorisation est conformé, Figures 11 et 12, de façon à pouvoir déplacer le bloc moteur 4 entre une position embrayée dans laquelle ce bloc 4 est relié à l'organe d'entraînement 6 (pignon de sortie 10 engrené à la couronne dentée 6 de la roue 2, tel qu'illustré à la figure 11), et une position débrayée dans laquelle ce bloc 4 en est séparé (pignon 10 désengrené de la couronne dentée 6, tel qu'illustré à la figure 12). Comme dans le mode de réalisation précédent, afin d'avoir une mise en engrenage simultanée des deux blocs moteur 4 avec les deux roues 2 et du fait de la solidarisation des deux blocs moteur 4, l'ensemble de deux systèmes de motorisation ne comprend qu'un seul dispositif d'embrayage 7. Cependant la synchronisation en vitesse entre le pignon 10 et la couronne dentée 6 est réalisée de manière séparée pour chaque couple roue 2 / bloc moteur 4.

Le dispositif d'embrayage 7 est conformé de sorte que le bloc moteur 4 est monté en rotation (par rapport à la partie non suspendue de la jambe de suspension 3) selon un axe horizontal 226. Ainsi, l'embrayage correspond à un mouvement du bloc moteur 4 vers le haut et vers l'avant, et le débrayage à un mouvement vers le bas et vers l'arrière.

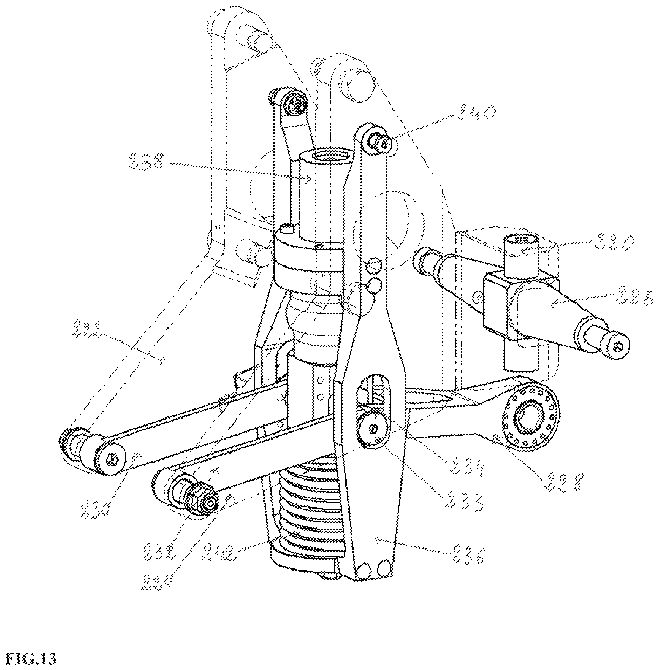

De plus, dans Figure 13, pour permettre un certain degré de liberté de déplacement horizontal relatif des réducteurs en cas de déformation du train d'atterrissage, et ainsi assurer une force approximativement égale sur chaque roue, le bloc réducteur est monté sur l'embrayage via un axe rotatif 220 sensiblement vertical.

Dans ce mode de réalisation, comme illustré à la figure 13, le dispositif d'embrayage 7 comprend deux plans fixes 222, 224 fixés à la partie non suspendue 3A de la jambe de suspension et formant deux plans parallèles aux roues. Ces deux plans portent à l'une de leur extrémité l'axe vertical 220 sur lequel se fixe un arbre horizontal 226. Sur cet arbre horizontal est fixé pivotant le bloc moteur 4. Le bloc moteur est fixé par ailleurs à une extrémité d'une bielle 228 définissant la première jambe d'une genouillère. Ainsi le bloc moteur pivote autour de l'arbre horizontal 226 sous l'action de la bielle 228.

Cette bielle 228 est conformée en V dont la pointe correspond à l'extrémité sur laquelle est fixée le bloc moteur par l'intermédiaire d'une rotule. A ses autres extrémités sont fixés deux autres bielles 230, 232 dont les extrémités opposées sont fixées, montées en rotation selon un axe horizontal, sur l'un des sommets des plans fixes 222, 224. Les mouvements des articulations entre les bielles 228 et 230, 232 sont rotatifs selon un axe horizontal et limités dans un déplacement vertical par le glissement de l'axe de rotation 233 dans une lumière 234 dans une plaque verticale supportant le système de déplacement 236, cet axe 233 correspondant à l'axe pivot de la genouillère.

Le système de déplacement 236 comprend un vérin 238 relié à l'axe pivot 233 de la genouillère et à la partie non-suspendue de la jambe de suspension 3 via les plaques 222, 224 par le point d'articulation 240.

Le dispositif d'embrayage 7 (plus précisément, le système de déplacement 236) permet d'appliquer une force suffisante sur le pignon de sortie 10 du bloc moteur 4 afin de le maintenir engrené avec la couronne dentée 6.

Dans le présent exemple, afin d'avoir un débrayage du bloc moteur 4 dès que l'alimentation électrique du moteur d'entraînement du système de déplacement 236 est coupée, le système de déplacement 236 comprend un ressort de rappel 242 qui, ici, enveloppe le vérin 238. Ainsi, le vérin 238 est utilisé pour entraîner le bloc moteur 4 dans sa position engrenée et le ressort 242 est utilisé pour l'entraîner dans sa position désengrenée. Le ressort 242 assure également qu'il n'y ait pas d'engrènement du pignon 10 sur la roue dentée 6 lors de l'atterrissage.

Le système de déplacement 236 est adapté à appliquer au bloc moteur 4 (au pignon 10) une force supérieure à une valeur limite nécessaire pour que le bloc moteur 4 reste en position embrayée (pour que le pignon 10 et la couronne dentée restent engrenés). Cette force peut être constante ou au contraire régulée à une valeur adaptée à l'effort nécessaire permettant de transmettre le couple moteur ou freineur.

Il s'agit aussi d'un système auto-dégageant au cas où une des roues ou un des moteurs se bloque, et ceci quel que ce soit le sens de marche de l'avion, dès que l'effort généré par les dentures est supérieur à celui du système de mise en place. Ainsi, le débrayage est forcé par un effet mécanique de l'effort des dentures sur le bloc moteur quand une force limite d'appui est atteinte. Il peut aussi être commandé suite à une alerte émanant d'un autre élément du système comme par exemple l'atteinte d'un niveau de couple moteur donné.

En outre, dans le second mode de réalisation, le fait que les deux pignons de sortie 10 des blocs moteur 104 sont coaxiaux permet de monter le système sur une articulation plus souple, ou alors de mettre de la souplesse dans le système lui-même, ce qui permet de reprendre les déformations rencontrées, par exemple celles des roues 2, les efforts générés sur les deux couronnes dentées 6 des deux roues 2 étant comparables. Les efforts peuvent cependant différer sensiblement si les coefficients d'adhérence au sol rencontrés par chaque roue du train sont différents.

Dans la présente application à un avion, ce système de motorisation est utilisé par exemple lors des phases avant le décollage, après l'atterrissage, c'est-à-dire pour tout déplacement au sol pour autant que la vitesse soit inférieure à la vitesse de taxiing maximale autorisée. Pendant ces phases, il est donc possible de ne pas utiliser les moteurs principaux de l'avion, ce qui permet de réduire la consommation de carburant, et donc les coûts et les émissions de polluants et de CO₂. Une autre conséquence de l'extinction des moteurs principaux de l'avion est une baisse des nuisances sonores.

Ce système de motorisation est commandé électroniquement de sorte que le bloc moteur est en position débrayée pendant les phases d'atterrissage et de décollage et pendant le vol.

La présente invention n'est pas limitée au présent mode de réalisation.

Ainsi, il pourrait être utilisé pour la motorisation d'une roue de nez.

Par ailleurs, la jambe pourrait porter un nombre différent de roues, selon notamment la taille de l'avion (d'une roue à huit). Il pourrait aussi y avoir plusieurs systèmes par roue (une roue entraînée par plusieurs moteurs). Il serait également possible que certaines roues (ou une seule) soit motorisées.

## Revendications

1. Système de motorisation d'une roue (2) associée à une suspension d'un aéronef pour la circulation au sol de celui-ci, comprenant un bloc moteur (4, 104), un organe d'entraînement (6) apte à être solidaire de la roue (2), et un dispositif d'embrayage (7) reliant l'arbre de sortie (8) du bloc moteur (4, 104) à l'organe d'entraînement (6), dans lequel le bloc moteur (4, 104) comprend un moteur électrique (11) et est apte à être porté par une partie non suspendue d'une jambe de suspension (3) et dans lequel la transmission entre l'arbre de sortie et l'organe d'entraînement est une transmission positive, l'organe d'entraînement (6) étant une couronne dentée (6) apte à être portée par la jante (9) de la roue (2), et adaptée à recevoir en engrènement le pignon de sortie (10) du bloc moteur (4, 104) quand ce dernier est dans sa position embrayée, **caractérisé en ce que** la position engrenée du pignon de sortie (10) est définie par deux lèvres de roulement (15) portées par la couronne dentée (6) et adaptées à recevoir en roulement sans glissement deux pistes de roulement (16) portées par le pignon (10).

2. Système de motorisation d'une roue (2) selon la revendication 1, **caractérisé en ce que** le bloc moteur (4, 104) est apte à être porté par une traverse d'essieu (5) de la roue (2).

3. Système de motorisation selon l'une des revendications 1 ou 2, **caractérisé en ce que** le bloc moteur (4, 104) comprend un système de réduction (12, 112) reliant l'arbre de sortie (13) du moteur (11) à l'organe d'entraînement (6).

4. Système de motorisation selon la revendication 3, **caractérisé en ce que** le système de réduction (12, 112) est solidaire du moteur (11).

5. Système de motorisation selon l'une des revendications 1 à 4, **caractérisé en ce que** le dispositif d'embrayage (7) est conformé de façon à pouvoir déplacer le bloc moteur (4, 104) dans une position embrayée dans laquelle ce bloc (4, 104) est relié à l'organe d'entraînement (6), et une position débrayée dans laquelle ce bloc (4, 104) en est séparé.

6. Système de motorisation selon la revendication 5, **caractérisé en ce que** le dispositif d'embrayage (7) est conformé de sorte que le bloc moteur (4, 104) est monté pivotant par rapport à la traverse d'essieu (5), selon un axe horizontal (226).

7. Système de motorisation selon la revendication 5 ou 6, **caractérisé en ce que** le dispositif d'embrayage (7) est conformé de sorte que le bloc moteur (4, 104) est monté pivotant par rapport à la traverse d'essieu (5), selon un axe sensiblement vertical (220).

8. Système de motorisation selon l'une des revendications 1 à 7, **caractérisé en ce que** le dispositif d'embrayage (7) comprend un système de déplacement (152) permettant de déplacer le bloc moteur (4, 104) de l'une à l'autre de ses deux positions embrayée et débrayée.

9. Système de motorisation selon l'une des revendications précédentes, **caractérisé en ce que** les lèvres de roulement (15) et les pistes de roulement (16) ont une portée cylindrique.

10. Système de motorisation selon l'une quelconque des revendications précédentes, **caractérisé en ce que** le pignon de sortie (10) est relié au bloc moteur (4, 104) par un joint homocinétique (250).

11. Système de motorisation selon la revendication 10, **caractérisé en ce que** le joint homocinétique (250) est placé au centre du pignon de sortie (10).

12. Ensemble de deux systèmes de motorisation conformes à l'une des revendications précédentes, **caractérisé en ce que** les deux blocs moteur (4, 104) sont solidaires l'un de l'autre et aptes à être fixés à la partie non suspendue de la jambe de suspension (3) commune aux deux roues (2).

13. Ensemble de deux systèmes de motorisation selon la revendication 12, **caractérisé en ce que** les deux blocs moteurs (4, 104) sont aptes à être disposés entre les deux roues (2).

14. Ensemble de deux systèmes de motorisation selon l'une des revendications 12 à 13, **caractérisé en ce que** l'engrènement des pignons de sortie et des organes d'entraînement (6) de chaque roue se trouve sensiblement à la même hauteur que l'axe des roues.

## Patentansprüche

1. Motorisierungssystem eines Rades (2), welches mit einer Radaufhängung eines Luftfahrzeugs für dessen Verkehr am Boden verknüpft ist, aufweisend einen Motorblock (4, 104), ein Antriebsorgan (6), welches dafür geeignet ist, fest mit dem Rad (2) verbunden zu sein, und eine Kupplungseinrichtung (7), welche die Abtriebswelle (8) des Motorblocks (4, 104) mit dem Antriebsorgan (6) verbindet, bei welchem der Motorblock (4, 104) einen elektrischen Motor (11) aufweist und dafür geeignet ist, von einem ungefederten Teil eines Federbeins (3) getragen zu werden, und bei welchem die Übertragung zwischen der Abtriebswelle und dem Antriebsorgan eine formschlüssige Übertragung ist, wobei das Antriebsorgan (6) ein Zahnkranz (6) ist, welcher dafür geeignet ist, von der Felge (9) des Rades (2) getragen zu werden, und dafür angepasst ist, das Abtriebsritzel (10) des Motorblocks (4, 104) in Eingriff aufzunehmen, wenn dieser letztere sich in seiner eingerückten Position befindet,
**dadurch gekennzeichnet, dass** die in Eingriff stehende Position des Abtriebsritzels (10) durch zwei Lagerlippen (15) definiert wird, welche von dem Zahnkranz (6) getragen werden und dafür angepasst sind, zwei von dem Ritzel (10) getragene Laufflächen (16) in Wälzeingriff ohne Gleiten aufzunehmen.

2. Motorisierungssystem eines Rades (2) nach Anspruch 1, **dadurch gekennzeichnet, dass** der Motorblock (4, 104) dafür geeignet ist, von einer Achstraverse (5) des Rades (2) getragen zu werden.

3. Motorisierungssystem nach einem der Ansprüche 1 oder 2, **dadurch gekennzeichnet, dass** der Motorblock (4, 104) ein Untersetzungssystem (12, 112) aufweist, welches die Abtriebswelle (13) des Motors (11) mit dem Antriebsorgan (6) verbindet.

4. Motorisierungssystem nach Anspruch 3, **dadurch gekennzeichnet, dass** das Untersetzungssystem (12, 112) fest mit dem Motor (11) verbunden ist.

5. Motorisierungssystem nach einem der Ansprüche 1 bis 4, **dadurch gekennzeichnet, dass** die Kupplungseinrichtung (7) so ausgebildet ist, damit der Motorblock (4, 104) in eine eingerückte Position, in welcher dieser Block (4, 104) mit dem Antriebsorgan (6) verbunden ist, und eine ausgerückte Position verlagert werden kann, in welcher dieser Block (4, 104) davon getrennt ist.

6. Motorisierungssystem nach Anspruch 5, **dadurch gekennzeichnet, dass** die Kupplungseinrichtung (7) derartig ausgebildet ist, dass der Motorblock (4, 104) drehbar in Bezug auf die Achstraverse (5) gemäß einer horizontalen Achse (226) montiert ist.

7. Motorisierungssystem nach Anspruch 5 oder 6, **dadurch gekennzeichnet, dass** die Kupplungseinrichtung (7) derartig ausgebildet ist, dass der Motorblock (4, 104) drehbar in Bezug auf die Achstraverse (5) gemäß einer im Wesentlichen vertikalen Achse (220) montiert ist.

8. Motorisierungssystem nach einem der Ansprüche 1 bis 7, **dadurch gekennzeichnet, dass** die Kupplungseinrichtung (7) ein Verlagerungssystem (152) aufweist, welches es ermöglicht, den Motorblock (4, 104) jeweils von der einen in die andere der eingerückten und ausgerückten Position zu verlagern.

9. Motorisierungssystem nach einem der vorhergehenden Ansprüche, **dadurch gekennzeichnet, dass** die Lagerlippen (15) und die Laufflächen (16) eine zylindrische Fläche aufweisen.

10. Motorisierungssystem nach einem der vorhergehenden Ansprüche, **dadurch gekennzeichnet, dass** das Abtriebsritzel (10) durch ein Gleichlaufgelenk (250) mit dem Motorblock (4, 104) verbunden ist.

11. Motorisierungssystem nach Anspruch 10, **dadurch gekennzeichnet, dass** das Gleichlaufgelenk (250) in der Mitte des Abtriebsritzels (10) angeordnet ist.

12. Baugruppe aus zwei Motorisierungssystemen nach einem der vorhergehenden Ansprüche, **dadurch gekennzeichnet, dass** die beiden Motorblöcke (4, 104) fest miteinander verbunden und dafür geeignet sind, an dem ungefederten Teil des für die zwei Räder (2) gemeinsamen Federbeins (3) befestigt zu werden.

13. Baugruppe aus zwei Motorisierungssystemen nach Anspruch 12, **dadurch gekennzeichnet, dass** die beiden Motorblöcke (4, 104) dafür geeignet sind, zwischen den beiden Rädern (2) angeordnet zu werden.

14. Baugruppe aus zwei Motorisierungssystemen nach einem der Ansprüche 12 bis 13, **dadurch gekennzeichnet, dass** sich der Eingriff der Abtriebsritzel mit den Antriebsorganen (6) von jedem Rad im Wesentlichen auf derselben Höhe wie die Achse der Räder befindet.

## Claims

1. Motorizing system for powering a wheel (2) associated with a suspension of an aircraft so that the latter can be moved around on the ground, comprising a motor unit (4, 104), a drive member (6) that is able to be secured to the wheel (2), and a clutch device (7) connecting the output shaft (8) of the motor unit (4, 104) to the drive member (6), in which the motor unit (4, 104) comprises an electric motor (11) and is able to be carried by an un-sprung part of a suspension strut (3), and in which the transmission between the output shaft and the drive member is a positive transmission, the drive member (6) being a ring gear (6) that is able to be carried by the rim (9) of the wheel (2) and designed to enter into mesh with the output gear (10) of the motor unit (4, 104) when the latter is in its engaged position, **characterized in that** the in-mesh position of the output gear (10) is defined by two rolling lips (15) carried by the ring gear (6) and designed to have, rolling along them without sliding, two runway tracks (16) carried by the gear (10).

2. Motorizing system for powering a wheel (2) according to Claim 1, **characterized in that** the motor unit (4, 104) is able to be carried by an axle crossmember (5) of the wheel (2).

3. Motorizing system according to one of Claims 1 and 2, **characterized in that** the motor unit (4, 104) comprises a reduction system (12, 112) connecting the output shaft (13) of the motor (11) to the drive member (6).

4. Motorizing system according to Claim 3, **characterized in that** the reduction system (12, 112) is secured to the motor (11).

5. Motorizing system according to one of Claims 1 to 4, **characterized in that** the clutch device (7) is configured in such a way as to be able to move the motor unit (4, 104) into an engaged position in which this unit (4, 104) is connected to the drive member (6), and a disengaged position in which this unit (4, 104) is separated therefrom.

6. Motorizing system according to Claim 5, **characterized in that** the clutch device (7) is configured in such a way that the motor unit (4, 104) is mounted to pivot with respect to the axle crossmember (5) about a horizontal pivot axis (226).

7. Motorizing system according to Claim 5 or 6, **characterized in that** the clutch device (7) is configured in such a way that the motor unit (4, 104) is mounted to pivot with respect to the axle crossmember (5) about a substantially vertical pivot axis (220).

8. Motorizing system according to one of Claims 1 to 7, **characterized in that** the clutch device (7) comprises a movement system (152) allowing the motor unit (4, 104) to be moved from one of its two, engaged and disengaged, positions into the other.

9. Motorizing system according to one of the preceding claims, **characterized in that** the rolling lips (15) and the runway tracks (16) have a cylindrical bearing surface.

10. Motorizing system according to any one of the preceding claims, **characterized in that** the output gear (10) is connected to the motor unit (4, 104) by a constant-velocity joint (250).

11. Motorizing system according Claim 10, **characterized in that** the constant-velocity joint (20) is placed at the centre of the output gear (10).

12. Assembly of two motorizing systems according to one of the preceding claims, **characterized in that** the two motor units (4, 104) are secured to one another and able to be fixed to the un-sprung part of the suspension strut (3) common to the two wheels (2).

13. Assembly of two motorizing systems according to Claim 12, **characterized in that** the two motor units (4, 104) are able to be arranged between the two wheels (2).

14. Assembly of two motorizing systems according to either of Claims 12 to 13, **characterized in that** the output gears and the drive members (6) of each wheel mesh with one another substantially at the same height as the axis of the wheels.
